## Europäisches Patentamt

## European Patent Office

## Office européen des brevets

(11) Veröffentlichungsnummer: **0 214 493 B1**

# EUROPÄISCHE PATENTSCHRIFT

(45) Veröffentlichungstag der Patentschrift: **18.03.92**

(21) Anmeldenummer: **86111205.0**

(22) Anmeldetag: **13.08.86**

(51) Int. Cl.5: **B65D 90/54**, B65D 88/12, B65D 90/10, F16J 13/08

(54) **Verschliessbarer Behälter für Flüssigkeiten, Schlämme oder dgl.**

(30) Priorität: **14.08.85 DE 3529081**

(43) Veröffentlichungstag der Anmeldung:
**18.03.87 Patentblatt 87/12**

(45) Bekanntmachung des Hinweises auf die Patenterteilung:
**18.03.92 Patentblatt 92/12**

(84) Benannte Vertragsstaaten:
**AT BE CH DE FR GB IT LI NL**

(56) Entgegenhaltungen:
CH-A- 372 781    CH-A- 575 873
DE-A- 2 543 731    GB-A- 557 372
US-A- 2 700 790    US-A- 3 924 780
US-A- 4 466 551

(73) Patentinhaber: **MABO Entsorgungs-Systeme Fahrzeug-, Maschinen-Apparatebau, Düsen und Zubehör, Fabrikation und Import-Export Handels-GmbH**
**Von-Nagel-Strasse 39-41**
**W-4740 Oelde 1(DE)**

(72) Erfinder: **Thüner, Udo Th.**
**Tom-Rinck-Strasse 7**
**W-4740 Oelde 1(DE)**

(74) Vertreter: **Strauss, Hans-Jochen, Dipl.-Phys., Dr. et al**
**Patentanwälte Dipl.-Ing. Gustav Meldau Dipl.-Phys. Dr. Hans-Jochen Strauss Venn-strasse 9 Postfach 2452**
**W-4830 Gütersloh 1(DE)**

## Beschreibung

Die Erfindung betrifft einen Behälter für Flüssigkeiten, Schlämme und dgl. mit einer offenen, mit einem klöpperartig gewölbten Boden verschließbaren Stirnseite, der an den Mantel des Behälters mit mindestens einem Scharnier mit zur Behälter-Achse rechtwinkliger Achse schwenkbar angelenkt ist, wobei jedes der Scharniere einen über Haltestützen an dem Mantel des Behälters befestigten Augbolzenhalter aufweist, in dem ein Augbolzen, dessen Schaft mit einem Gewinde versehen ist, geführt ist, der eine ersten Feststellmutter aufweist, mit der dieser in Zugrichtung einstellbar festgelegt ist, und der weiter über einen Verbindungsbolzen mit einem am Boden befestigten und mit einem Auge versehenen Ausleger zusammenwirkend verbunden ist, wobei der Behältermantel mit mehreren über ihren Umfang verteilt angeordneten, mit dem Boden zusammenwirkenden Verriegelungselementen versehen ist (US-A-2700790).

Behälter zur Aufnahme von Flüssigkeiten, Schlämmen u. dgl. bedürfen der vollständigen Entleerung und sie müssen von Zeit zu Zeit gereinigt werden. Um dies zu erreichen, wird einer der den Behälter verschließenden Böden an den Behälter angelenkt, so daß der Behälter durch Aufschwenken des Bodens geöffnet werden kann. Der Schwerpunkt dieser Anordnung liegt in der Dichtung. Bei den bisherigen Anordnungen wird eine Stehkante auf eine in einer U-Nut befindlichen Dichteinlage gedrückt, wobei ein hinreichend großer Hub zum Erzielen einer vollständigen Abdichtung ringsum notwendig ist. Durch diesen großen Hub wird die Dichtung über Gebühr beansprucht, so daß die Dichtungsauswahl auf einige Materialien beschränkt ist. Da die vom Behälter aufzunehmenden Flüssigkeiten, Schlämme o. dgl. jedoch die unterschiedlichsten Anforderungen an die Dichtungsmaterialien stellen, schränkt die Beschränkung der verwendbaren Dichtungsmaterialien die Verwendbarkeit des Behälters ein. Darüber hinaus führt der große Hub dazu, daß die Verschlußkonstruktionen entsprechend aufwendig ausgeführt werden müssen und - eben wegen des großen Hubes - nicht einfach entriegelbar sind. Ein weiterer sicherheitstechnischer Aspekt ist dadurch gegeben, daß unter bestimmten Umständen Verpuffungen im Behälter zu einem schnellen Druckanstieg führen können. Sind - wie bei undefinierten Flüssigkeiten und Schlämmen im Bereich des Möglichen - die Sicherheitseinrichtungen verklebt, führt der Druckaufbau zum Aufreißen des Behälters, da für den zu einem Undichtwerden notwendigen Hub die Dehnungsgrenze der geschlossenen Verschlußglieder überschritten wird.

Aus der DE OS 25 43 731 ist ein Schnellverschluß für Druckbehälter bekannt geworden, bei dem der Druckbehälter mit einem abnehmbaren Deckel verschlossen ist und der mindestens ein beide Flansche übergreifendes Jochelement enthält, das mit einer hydraulischen Druckkolbeneinrichtung versehen mit beiden Flanschen, diese gegeneinander drückend zusammenwirkt. Mit dieser Vorrichtung soll ein Verschlußsystem geschaffen werden, das wesentlich schneller als ein Verschlußsystem mit Segmentklammerschrauben arbeitet, sondern bei dem auch keine ungünstigen Flachdichtungen erforderlich sind, und das auch ohne große Kosten an den jeweiligen Verwendungszweck angepaßt werden kann. Die beschriebenen, klammerartig die Flansche übergreifenden Klammerelemente erlauben möglicherweise ein schnelles Arbeiten bei in Abdichtebene verschiebbaren Deckel; für Verschlußdeckel, die um eine Drehachse verschwenkt werden, lassen sich dagegen klammerartige Jochelemente nicht ohne weiteres einsetzen. Bei um eine Achse quer zur Achse des Behälters schwenkbaren Deckeln wäre etwa die Hälfte der jochförmigen Klammerelemente über den Umfang der Flansches des Behälter und die andere Hälfte über dem dazu entgegengesetzt liegenden Umfang des Verschlußdeckels zu verteilen. Eine Lehre zum Ausrichten und zur Justage der Parallelität der Flansche von Behälter und Deckel ist in dieser Druckschrift nicht zu erkennen.

Aus der US-PS 2 700 790 ist eine Kombination eines Scharniers zur Anlenkung eines Verschlußdeckel an einen Behälter sowie darauf abgestimmte Verrieglungselemente bekannt. Die Scharniere sind so ausgebildet, daß der Verschlußdeckel frei aufgeschwenkt werden kann, wenn die Verriegelungselemente gelöst worden sind. Als Verriegelungselemente dienen Schraubelemente, die mit einem Querbolzen in einem Bolzenlager behälterseitig gelagert sind und deren aufgeschraubte Muttern in dem Flansch des Verschlußdeckels ihr Widerlager finden. Die Scharniere sind darüber hinaus so ausgebildet, daß sie in sich quer zur Schwenkachse längenverstellbar geführt sind, wobei eine im Scharnier vorgesehene Feder eine Kraft liefert, die beim Öffnen des Deckels den Scharnierbolzen im Lager hält. Die Grenzlage des Bolzens und die Vorspannung der Feder kann dabei mittels einer Mutter eingestellt werden. Eine Justage des Scharniers ist dabei nicht vorgesehen, da es neben seiner Aufgabe des Schwenkens auch die des Anziehens im Sinne des Spannens der Verrieglungselemente erfüllen soll. Auch eine Justage der Verrieglungselemente selbst ist bei der beschriebenen Ausführung nicht vorgesehen. Die CH-PS 575 873 betrifft ebenfalls einen Verschluß, der für Einfüllöffnungen an innendruckbelastbaren Silobehältern vorgesehen ist. Dieser Verschluß ist mit einem verschwenkbaren Verschlußdeckel versehen, der mittels eines -von Hand oder hydraulischen betätigten- Antriebs um eine Schwenkachse parallel zur Achse der Einfüllöffnung verschwenkt wird. Dabei wird der Verschlußdeckel zunächst ohne Abdichtung in die "Zu"-Stellung geschwenkt und danach durch ein unter die Dichtung eingepreßtes Druckmedium und ein damit bewirktes Anpressen der Dichtung durch eine Bewegung auf den Deckel zu abgedichtet. Die Dichtung ist dabei eine umlaufende Dichtung mit trapezförmigem Querschnitt.

Hier setzt die Erfindung ein, der die Aufgabe zugrunde liegt, einen Behälter vorzuschlagen, dessen Deckel mit geringem Hub dicht aufbringbar ist, bei dem die Dichtungen in einfacher Weise austauschbar sind, wobei die Härte der Dichtung für das Abdichten unbedeutsam ist und der sicher einsetzbar ist.

Diese Aufgabe wird nach der Erfindung gelöst durch die im Kennzeichen des Anspruch 1 enthaltenen Merkmale; vorteilhafte Weiterbildungen und bevorzugte Ausführungsformen beschreiben die Unteransprüche.

Zur Lösung wird vorgeschlagen, daß jedes der mit dem Boden zusammenwirkenden, bezüglich seines Haltepunktes einstellbar ausgebildeten Verriegelungselemente mit einem tangential zu den Flanschringen bewegbarem Riegel versehen ist und jeder der eingesetzten Riegel mit einer Außenfläche gegen eine behälterfeste Gegenfläche abgestützt ist, während eine der Außenfläche gegenüber angeordnete Schrägfläche mit einer ihrer Schräge entsprechenden Gegenfläche an einer verschlußbodenfesten Riegelaufnahme als Keilverschluss zusammenwirkt, und wobei jeder der Riegel an seinem einen Ende einen einstellbaren Augbolzen aufweist, dessen Auge mit dem einen Ende eines um einen behälterfesten Bolzen drehbaren Hebels zusammenwirkt, und daß der Augbolzen jedes der Scharniere eine zweite Kontermutter aufweist, mittels der dieser gegen die Zugrichtung einstellbar festlegbar ist. Durch diese Ausbildung der Verschlußelemente wird eine mechanisch betätigbare Verriegelung vorgegeben, wobei die Riegel in Riegelaufnahmen einsetzbar sind, wobei die verschlußbodenfesten Riegelaufnahmen zwischen behälterfesten Backen einführbar sind und der Riegel sich sowohl gegen die Stirnflächen der Backen als auch gegen eine der Stirnfläche gegenüberliegende Innenwand einer Öffnung der Riegelaufnahme abstützt. Die durch die Schrägflächen bedingte Keilform des Riegels gestattet einmal ein leichtes Einführen, auch wenn der Verschlußboden noch nicht seine endgültige Position erreicht hat und erlaubt darüber hinaus die für die Abdichtung notwendigen Anpreßkräfte aufzubringen. Durch die Scharnier-Ausbildung wird erreicht, daß mittels jedes der justierbaren Scharniere der Boden so ausgerichtet werden kann, daß die beiden einander gegenüberstehenden Flansche von Behälter und Deckel im Dichtbereich absolut parallel ausgerichtet sind und so ein geringer Hub ausreicht, um die notwendige Dichtheit zu erreichen. Durch diese Ausrichtung in Verbindung mit dem geringen Hub wird es möglich, auch ungewöhnlich harte Dichtungen, die bei bestimmten chemischen Angriffen von zu entsorgenden Medien unumgänglich sind, einzusetzen. Sofern in diesen besonderen Fällen die beständigen Materialien eine übergroße Härte aufweisen, können auch an sich bekannte Zweistoff-Dichtungen eingesetzt werden, bei denen ein aus den beständigen Material bestehender Überzug auf einen Kern aus einem Schaumstoffmaterial geeigneter Härte aufgebracht ist. Durch Einstellen der Dichtungshärte in den Bereich von 30 bis 70 Shore lassen sich die Dichtungskräfte auch bei Kesseldurchmessern bis etwa 3 m sicher beherrschen.

Damit wird ein Verschluß mit einem Dichtungsring mit gegenüber der Breite des Flansches kleiner Abmessung vorgeschlagen, wobei die Gegenfläche von der planen Oberfläche des Gegenflansches gebildet wird und bereits bei einem geringfügigen Hub die notwendige Abdichtung ringsum erreicht wird. Der in die Nut eingelegte Dichtring läßt sich in einfacher Weise austauschen, so daß beliebige für den Anwendungsfall jeweils geeignete Dichtungsmaterialien eingesetzt werden können.

In Weiterbildung wird vorgeschlagen, daß die behälterfeste Gegenfläche der Stirnseiten von auf dem behälterseitigen Flanschring vorgesehenen Backen gebildet ist, wobei die Backen axial ausgerichtet sind und zur Öffnungsseite des Behälters hin eine den Abstand zwischen ihnen vergrößernde Abknickung aufweisen und daß auf dem bodenseitigen Flanschring eine axial ausgerichtete, zwischen die Backen einführbare Riegelaufnahme vorgesehen ist, wobei die Riegelaufnahme eine Öffnung aufweist, deren Querschnitt dem Querschnitt des einzuführenden Riegels entspricht, und wobei die dem freien Ende der Riegelaufnahme zugewandte Innenwand der Öffnung die mit der Schrägfläche des Riegels zusammenwirkende Schrägfläche bildet. In einer vorteilhaften Weiterbildung sind alle freien Enden der Hebel aller Riegelverschlüsse über eine den Behälter umfassende Koppel miteinander verbunden, wobei als Antrieb der Koppel einer der Hebel über das Auge eines der Riegel hinaus eine Verlängerung aufweist. Bei dieser Ausführungsform wird eine mechanisch betätigbare Ver- und Entriegelung durch die mit den Riegelaufnahmen zusammenwirkenden Riegel erreicht. Um besonders bei großen Durchmessern das Einführen der Riegelaufnahme zwischen die Backen zu erleichtern, erhalten die Backen eine den Abstand zwischen ihnen vergrößernde Abknickung. Durch eine Koppel lassen sich alle Riegel gemeinsam betätigen. Dabei ist die Koppel um den Behälter geführt und mit Hebeln versehen, die um einen behälterfesten Bolzen drehbar gelagert sind. Am freien Ende der Hebel befinden sich die in die Regelaufnahme einführbaren Riegel. Der Antrieb kann an der Koppel selbst angreifen; vorteilhaft ist es auch, einen der Hebel zu verlängern, wobei die Verlängerung die Funktion des Antriebshebels übernimmt. Der Antrieb selbst kann mit einer Kraftquelle, z.B. einem Hydraulikzylinder versehen sein, eine Handbetätigung über einen Handgriff an der Koppel oder einen Handgriff an der Hebelverlängerung ist ebenfalls möglich.

Vorteilhaft ist es, wenn der Flanschring am Verschlußboden nach außen überstehend angeordnet ist und die Pratze für den Angriff der Kralle des Verriegelungselements bildet. Es ist an sich unerheblich, ob der behälterseitige Flanschring nach außen übersteht, da der klöpperbodenartig gewölbte Verschlußboden nicht notwendigerweise mit der Behälterwand fluchten muß, sondern im Flanschinneren angesetzt sein kann. Im Hinblick auf die Reinigungsmöglichkeit des Behälters empfiehlt es sich jedoch, auch den behälterseitigen Flanschring nach außen überstehend anzuordnen. Durch die Anordnung des Flanschrings am Behälterdeckel werden darüber hinaus eigene Pratzen überflüssig.

Eine alternative Ausführungsform ist dadurch gegeben, daß jedes der mit dem Boden zusammenwirkenden, bezüglich seines Haltepunktes einstellbar ausgebildeten Verriegelungselemente als Über-Totpunkt-Verschluß ausgebildet ist, wobei jedes der Verriegelungselemente mit einer Kralle hinter eine Pratze am Verschlußboden greift und jede der Kralle über eine Schubstange und einen Lenker mit einem behälterfesten Basisteil verbunden ist, wobei die Schubstange zwischen Lenker und Kralle mindestens in ihren Endbereichen mit die Justierung der Lage der Kralle ermöglichenden Gewinde versehen ist, und daß der Augbolzen jedes der Scharniere eine zweite als Kontermutter gegen die Zugrichtung wirkende Mutter aufweist und mittels der beiden Muttern einstellbar festlegbar ist. Eine vorteilhafte Weiterbildung ist dadurch gegeben, daß der Lenker bei geschlossenem Verriegelungselement auf einem im Basisteil vorgesehenen, zum Einstellen des Haltepunktes verstellbaren Justierbolzen aufliegt und vorzugsweise mit einem Loch zum Öffnen vorzugsweise mittels eines Hydraulikzylinders versehen ist. Dabei ist vorteilhaft der Flanschring am Verschlußboden nach außen überstehend angeordnet und bildet die Pratze für den Angriff der Kralle des Verriegelungselements. Schließlich sind die in den beiden Endbereichen der Schubstange vorgesehenen Gewinde gegenläufig, wobei das lenkerseitige Aufnahmestück und das krallenseitige Aufnahmestück für die Schubstange dazu korrespondierend ebenfalls gegenläufige Gewinde aufweist, und daß die Schubstange mit einem Paßstück versehen ist, das vorzugsweise etwa in ihrer Mitte angeordnet und als Sechskant ausgebildet ist. Auch bei dieser Ausführungsform wird eine mechanisch betätigbare Ver- und Entriegelung erreicht, und zwar durch die mit den Pratzen zusammenwirkenden Krallen, die, axial wirkend, besonders auch mit Kraftquellen, z. B. mit Hydraulikzylindern antreibbar sind. Die Auflage auf einen verstellbaren Justierbolzen wirkt auf die Über-Totpunkt-Lage bei geschlossenem Verschluß. Dieser Justierbolzen verhindert ein übergroßes Überschreiten der Totpunkt-Lage, wodurch ein unerwünschtes Entspannen, was im Hinblick auf den geringen Hub möglicherweise zu Undichtheiten führen könnte, vermieden wird.

Die Justierbarkeit der Schubstange wirkt bei behälterseitig festem Anlenkpunkt auf die Lage der Kralle bei geschlossenem Verriegelungselement. Dies ist im Hinblick auf den geringen Hub besonders dann von Vorteil, wenn beispielsweise der Behälterflansch oder der Deckelflansch verzogen sind. Durch gegenläufige Gewinde in beiden Endbereichen der Schubstange wird ein Justieren in einfacher Weise möglich, da beim Drehen der Schubstange auf beiden Seiten gegenläufige Bewegungen erfolgen. In einfacher Weise kann die Schubstange gedreht werden, wenn etwa in ihrer Mitte ein mit einem Gabelschlüssel faßbares Paßstück angeordnet ist. Die Anordnung eines Lenkers, der mit einem Loch versehen ist, ermöglicht den Anschluß eines Hydraulikzylinders zur Betätigung des Verriegelungselements. Darüber hinaus gelingt es, den Behälter auch dann zu öffnen, wenn etwa die Hydraulik ausgefallen ist. Die nur geringfügig über den Totpunkt hinausgehende Endlage gestattet es nämlich, daß ohne wesentlichen Kraftaufwand am Loch des Lenkers angreifend das Verriegelungselement gelöst wird.

Zur Anlenkung des Bodens an den Behälter ist ein ein- oder mehrfaches, vorzugsweise ein zweifaches Scharnier vorgesehen, das beidseits einen über Haltestützen an dem Mantel des Behälters befestigten Augbolzenhalter aufweist, in dem der Augbolzen geführt ist und bodenseitig ist ein mit einem Auge versehener Ausleger am Bodenblech befestigt ist, wobei ein Verbindungsbolzen das Auge des Augbolzens und das Auge des Auslegers verbindet, und wobei der Augbolzen mit einem Gewinde versehen ist und mittels Mutter und Kontermutter am Augbolzenhalter einstellbar festlegbar ist. Durch diese Ausführungsform wird die für den geringen Hub notwendige Justierbarkeit des Verschlußbodens erreicht. Ebenso läßt sich - bei Mehrfach-Scharnieren - die zur Dichtheit notwendige Parallelität der bei geschlossenem Boden einander zugewandten Kreisringflächen der Flanschringe justieren. Dabei ist es selbstverständlich, daß die Justierschrauben ein hinreichend feines Gewinde aufweisen, und daß sie mittels Mutter und Kontermutter, ggf. unter Hinzufügung anderer Schraubensicherungen, festlegbar sind.

In einer bevorzugten Ausführungsform sind Behälter und Boden an den einander zugewandten Stirnflächen mit je einem Flanschring versehen, deren einander zugewandten Kreisringflächen bei geschlossenem Behälter einander parallel gegenüberstehen und eine der Kreisringflächen mindestens eine umlaufende Nut mit einem Dichtring, dessen Querabmessung der mittleren Nut-Weite entspricht, aufweist, wobei die Breite der Flanschringe mindestens der 4-fachen Dicke der Behälterwand und die mittlere Weite der Nut etwa 1/3 der Breite der Kreisringfläche betragen und daß die Nut in dem einen der Flanschringe eine Tiefe höchstens gleich der Höhe des Dichtringes aufweist, und wobei die Gegenfläche von der der Kreisringfläche mit Nut des einen Flanschringes gegenüberliegenden Kreisringfläche des anderen Flanschringes gebildet ist. Da ein Anpressen im Bereich von 1/10 mm bereits die notwendige Dichtheit ringsum ergibt und da die Verschlußorgane eine Dehnung in dieser Größenordnung noch im elastischen Bereich überstehen, kann auch eine Verpuffung im Behälter allenfalls zu einem kurzzeitigen Undichtwerden führen, wenn der Druck nicht auf andere Weise abgeführt werden kann. Durch das kurzzeitige Undichtwerden wird der Überdruck im Bereich der Dichtung abgeblasen und eine Gefährdung der Umgebung durch einen aufreißenden Behälter ist ausgeschlossen. Sind in der mit Nuten versehenen Ringfläche des Kreisringes des einen Flansches zwei oder mehr Nuten vorgesehen, sind - ensprechend der Zahl der Nuten - mehrere Dichtungsringe eingesetzt, wobei mindestens der innerste, die für die vom Behälter aufzunehmende Flüssigkeit, Schlämme o. dgl. notwendige Beständigkeit aufweist. Der zwischen zwei Dichtringen vorhandene Ringraum kann bei einer derartigen Anordnung als Überwachungs- und Prüfeinrichtung benutzt werden. Hierzu wird der Ringraum unter einen vom Außendruck und vom Behälterinnendruck abweichenden Druck gesetzt, wobei es keine Rolle spielt, ob dieser Druck ein Über- oder ein Unterdruck ist. Die Druckänderung oder aber der zum Halten des Druckes notwendige Gasstrom, der bei Überdruck zugeführt bzw. bei Unterdruck abgesaugt wird, gibt Aufschluß über die erreichte Dichtheit.

Alternativ wird vorgeschlagen, daß Behälter und Boden an den einander zugewandten Stirnflächen mit je einem Flanschring versehen sind, deren einander zugewandten Kreisringflächen bei geschlossenem Behälter einander parallel gegenüberstehen und eine der Kreisringflächen mindestens eine umlaufende Nut mit einem Dichtring, dessen Querabmessung der mittleren Nut-Weite entspricht, aufweist, wobei die Breite der Flanschringe mindestens der 4-fachen Dicke der Behälterwand und die mittlere Weite der Nut etwa 1/3 der Breite der Kreisringfläche betragen und daß die Nut in dem einen der Flanschringe eine Tiefe mindestens gleich der Höhe des Dichtringes aufweist, und wobei die Gegenfläche von einer mittig zur Nut verlaufenden, auf der der Kreisringfläche mit Nut des einen Flanschringes gegenüberliegenden Kreisringfläche des anderen Flanschringes angeordneten, erhabenen, umlaufenden Vorsprung gebildet ist. Dabei ist eine vorteilhafte Weiterbildung dadurch gegeben, daß der Querschnitt des umlaufenden Vorsprunges ein rechteckiger ist, mit einer Breite höchstens gleich der engsten Weite der Nut. Eine andere Weiterbildung, die insbesondere bei harten Dichtungen vorteilhaft ist, ist dadurch gegeben, daß der Querschnitt des umlaufenden Vorsprunges ein dreieckiger ist.

Der in die Nut/Nuten eingelegte Dichtring ist dabei ein Endlos-Ring, der vorteilhafterweise als Rundschnurring ausgebildet ist, oder der den Querschnitt eines Dach-Profils aufweist. Bei beiden Formen ergeben sich Quasi-Linienanlagen, wodurch bei gegebener Kraft der die Dichtheit bestimmende Anlagedruck hinreichende Größe aufweist. Bei diesen letzten Ausführungsform der Flansche greift jeweils der Vorsprung der Gegenfläche in die Nut ein und legt sich gegen den Dichtring, der geschützt im Inneren der Nut liegt. Zur Verringerung der zur Abdichtung notwendigen Kraft wird auch hier die mit dem Dichtring zusammenwirkende Vorderseite des Vorsprungs dreieckförmig ausgebildet. Durch den Vorsprung selbst kann dabei auch immer eine Zentrierung des Verschlußbodens erreicht werden.

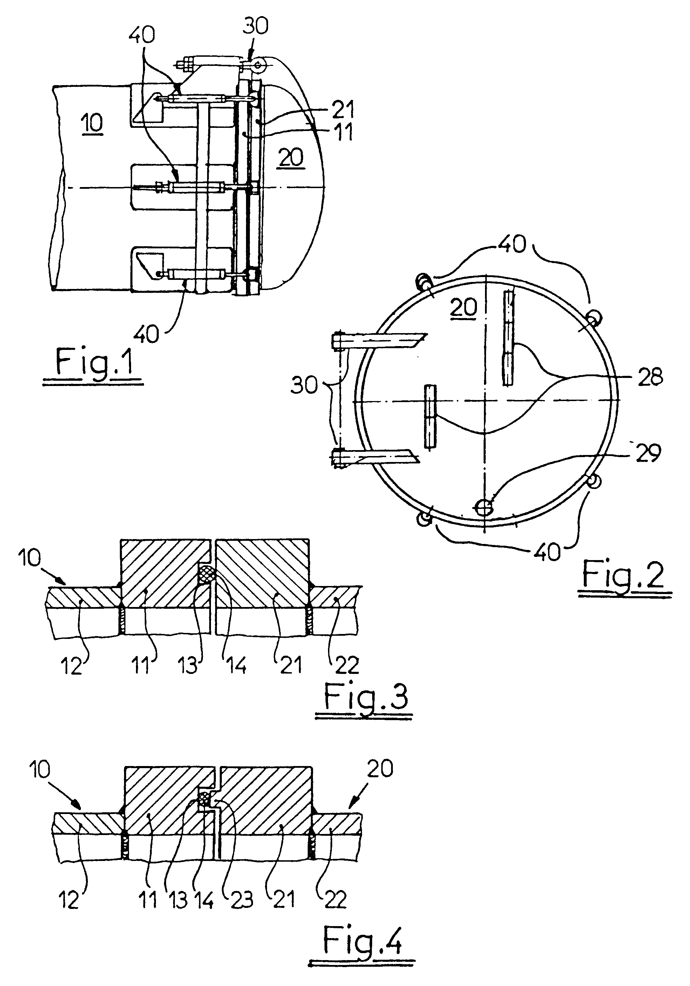

Das Wesen der Erfindung wird anhand der Figuren 1 bis 8 näher erläutert, dabei zeigen

| | |
|---|---|
| Figur 1 | das hintere Ende eines öffenbaren Behälters mit Verschlußboden in Seitansicht |
| Figur 2 | das hintere Ende eines offenbaren Behälters mit Verschlußboden in rückwärtiger Ansicht |
| Figur 3 | Flanschdichtung, Querschnitt |
| Figur 4 | Flanschdichtung, Querschnitt |
| Figur 5 | Scharnieranlenkung des Verschlußbodens an den Behälter |
| Figur 6 | geschlossener Krallenverschluß mit - teilgeschnittenen - Flanschringen |
| Figur 7 | Riegelverschluß-Aufsicht, teilgeschnitten, gemäß VII-VII (Figur 8) |
| Figur 8 | Riegelverschluß ohne Riegel, Aufsicht, teilgeschnitten |

Die Figuren 1 und 2 zeigen - schematisch - das öffenbare Ende eines Behälters 10, das mit einem klöpperbodenartig gewölbten Deckel 20 verschlossen ist. Der Verschlußdeckel 20 ist mittels eines Scharniers 30 am Behälter 10 befestigt. Dieses Scharnier kann im Scheitelbereich des Behälters 10 - Figur 1 - vorgesehen sein; es kann sich auch - Figur 2 - seitlich am Behälter befinden. Während im ersten Fall der Verschlußboden 20 nach oben aufgeschwenkt wird und sich um eine im wesentlichen horizontale Schwenkachse dreht, wird im zweiten Fall der Verschlußboden 20 um eine vertikale Drehachse (die strichpunktiert in Figur 2 angedeutet ist) zur Seite geschwenkt. Die Scharnieranordnung im Scheitelbereich des Behälters 10 bietet sich dann an, wenn - etwa zur Reinigung - der Behälter 10 mit seinem vorderen - in Figur 1 nicht näher dargestellten - Teil angehoben wird um Schlamm u.dgl. die Möglichkeit zum Abfliessen zu geben. Die über den Umfang verteilten Verriegelungsorgane 40 sind in Figur 1 als hydraulische Zylinder dargestellt, die am Behälter 10 befestigt mit einer an dem Schubstangenende befestigten Kralle mit dem Verschlußdeckel 20 zusammenwirken. Dabei werden die am Ende des Behälters 10 und der dem Behälter zugewandten Seite des Verschlußbodens 20 vorgesehenen Flanschen 11 und 21 gegeneinander gedrückt.

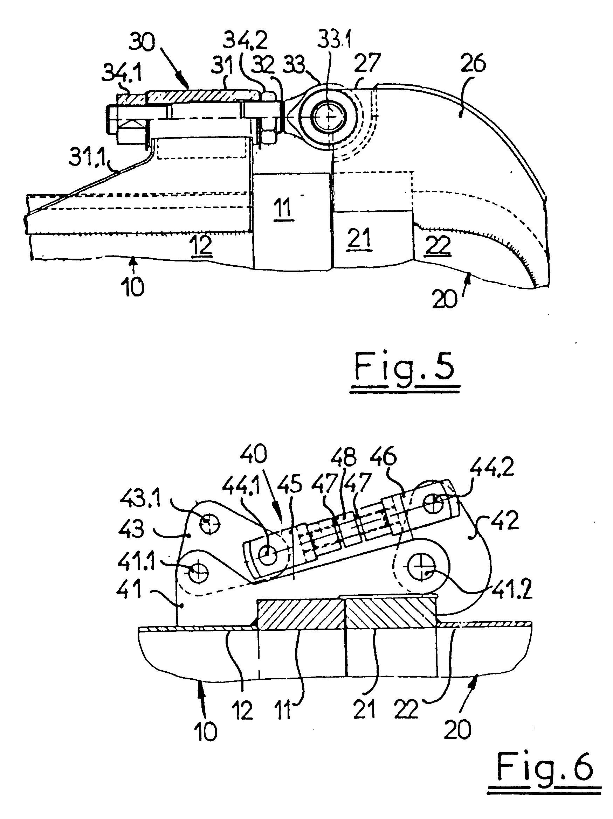

Die Figuren 3 und 4 zeigen Einzelheiten der Flanschen 11 und 21 im geschlossenen Zustand. Der am letzten Schuß 12 des Behälters 10 vorgesehene behälterseitige Flansch 11 ist mit einer Nut 13 versehen, in der eine Runddichtung 14 eingelegt ist. Der am Verschlußbodenrand 22 befestigte Flansch 21 wirkt mit seiner stirnseitigen Gegenfläche mit der Rundschnurdichtung zusammen und stellt bei entsprechendem Anpreßdruck die Dichtheit zwischen beiden Flanschen her. Die Ausführungsform nach Figur 4 enthält eine gegenüber dem Durchmesser der Rundschnurdichtung 14 vertiefte Nut 13, in die ein auf der gegenüberliegenden kreisringförmigen Stirnseite des behälterseitigen Flansches 21 angeordneter Vorsprung 23 eingreift. Dieser Vorsprung, der mit guter Passung hergestellt sein kann, wirkt mit dem Dichtring zusammen und sorgt für eine Zentrierung des Verschlußdeckels. Darüber hinaus besteht eine labyrinthdichtungsähnliche Wirkung.

Die Figur 5 zeigt die Ausbildung des Scharniers 30, das mit Halterstützen 31.1 am letzten Schuß 12 des Behälters 10 befestigt ist. Die Halterstützen 31.1 tragen Bolzenhalter 31. In jedem der Bolzenhalter 31 ist ein Augbolzen 32 eingeführt, dessen Bolzenschaft mit einem Gewinde versehen ist. Feststell- Kontermuttern 34.1 und 34.2 gestatten es, die Lage des Bolzens in dem Augbolzenhalter justierbar zu verändern. Das andere Ende des Augbolzens 32 ist mit einem Auge 33 versehen, das mit dem am klöpperbodenartig gewölbten Deckel 22 befestigten Ausleger 26, der mit einem Lenkerauge 27 versehen ist, zusammenwirkt. Das Auge des Augbolzens 33 und das Auge des Lenkers 27 werden dabei durch den Augbolzen 33.1 schwenkbar zusammengehalten. Durch diese Konstruktion des Lagers ist die Einstellungsmöglichkeit gegeben, die die Ringsum-Dichtheit auch bei verzogenem Flansch herzustellen gestattet.

Die Figur 6 zeigt die Ausbildung eines Verriegelungselements als Über-Todpunkt-Verschluß mit Kralle 42. Das am letzten Schuß 12 des Behälters 10 befestigte Basisteil 41 reicht bis über den an der Stegkante 22 des Verschlußdeckels 20 befestigten, nach außen überstehenden verschlußdeckelseitigen Flanschringes 21. Auf der Behälterseite ist mittels eines Drehbolzens 41.1 ein Lenker 43 befestigt, während behälterseitig mit einem zweiten Drehbolzen 41.2 die Kralle 42 am Basisteil 41 schwenkbar befestigt ist. Eine Schubstange 47, die mittels des Drehbolzens 44.1 am Lenker 43 und mittels des Drehbolzens 44.2 an der Kralle befestigt ist, überträgt die Bewegung des Lenkers 43 auf die Kralle 42. In geschlossener Stellung liegt der Lenker 43 mit seiner unteren Kante auf einer im Basisteil 41 vorgesehenen Justierschraube 49 auf, mit der die Lage des Lenkers 43 gerade so eingestellt werden kann, daß beim Schließen der Todpunkt um eine geringfügige Wegstrecke überschritten wird. Das am Lenker vorgesehene Auge 43.1 dient als Angriffspunkt für eine Kraftquelle, beispielsweise einen Hydraulikzylinder. Die Schubstange 47 ist in den mit Gabeln,den Lenkern 43 bzw. die Kralle 42 umfassenden Endstücken 45 und 46 eingeschraubt, wobei die Gewinde gegenläufige Steigung aufweisen. Mittels des als Sechskant ausgebildeten Paßstückes 48 kann die Schubstange 47 verdreht und somit die Entfernung der Achsen der Augbolzen 44.1 und 44.2 voneinander so justiert werden, daß Dichtheit der mit der (nicht näher dargestellten) Rundschnurdichtung gedichteten Flansche 11 und 21 erreicht wird.

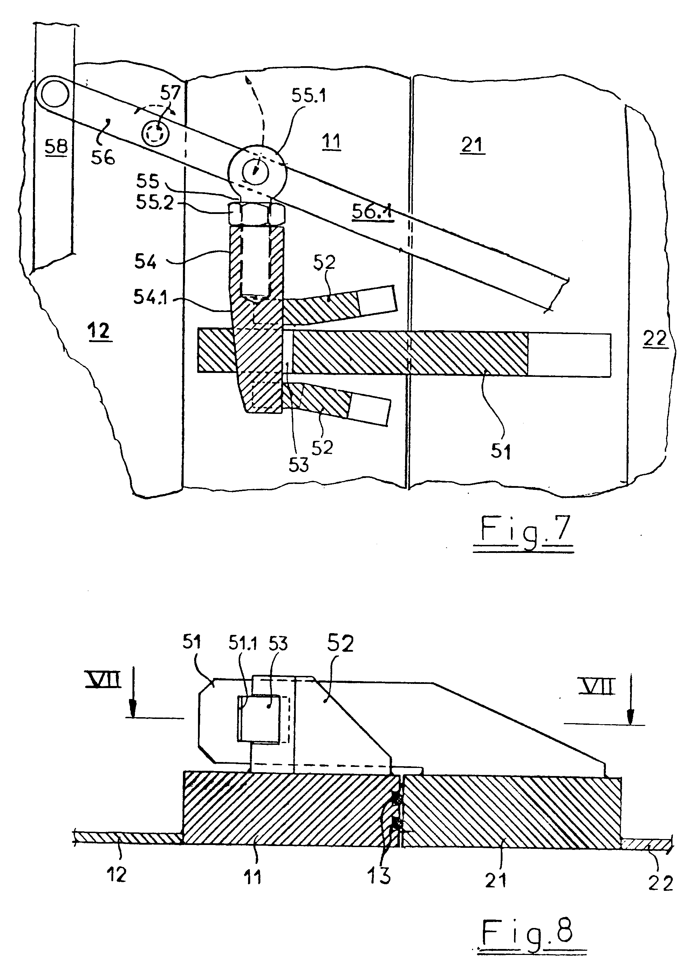

Die Figuren 7 und 8 schließlich zeigen einen Riegelverschluß, bei den auf der Außenseite des behälterseitigen Flanschringes 11 für jedes Verriegelungselement zwei Backen 52 vorgesehen sind, die im wesentlichen parallel zur Achse ausgerichtet sind und deren zum Verschlußboden zugewandten Öffnung als Einlauf-Öffnung für die verschlußbodenseitige Riegelaufnahme 51 weiter geöffnet sind. Bei geschlossenem Verschlußboden liegt die Riegelaufnahme 51 zwischen den beiden Backen 52 und es kann der Riegel 54 in die Öffnung 53 der Riegelaufnahme eingeführt werden. Die dem Verschlußboden zugewandte Seite stützt sich dabei gegen die Stirnflächen der Backen 52 ab. Es versteht sich von selbst, daß diese Stirnfläche durch Ausnehmen der Backen zurückverlegt sein kann, wobei die seitlichen Überstände den Riegel führen. Die Öffnung 53 in der Riegelaufnahme 51 ist auf ihrer dem Behälter 10 zugewandten Seite mit einer der Schräge der Schrägfläche 54.1 des Riegels entsprechenden Schrägfläche 51.1 versehen, wobei beide Schrägflächen im Sinne eines Keilverschlußes miteinander zusammenwirken. In den Riegel 54 ist ein Augbolzen 55 eingeschraubt, der mit einem Hebel 56 zusammenwirkt, wobei der Hebel als zweiarmiger Hebel drehbar um den Drehbolzen 57 - wie in Figur 7 durch den gestrichelten Doppelpfeil angedeutet - geschwenkt werden kann. Dabei wird der Riegel 54 über den Augbolzen 55 und das Auge 55.1 an dem der Hebel 56 befestigt ist, mitgenommen und schwenkt - wie in Figur 7 mit dem gestrichelten Doppelpfeil dargestellt - aus. Das freie Ende des Hebels 56 ist mit einer Koppel 58 versehen, die diesen Hebel mit den anderen Hebeln der Verriegelungsorgane verbindet. Einer der Hebel 56 trägt eine Verlängerung 56.1, die als Handgriff ausgebildet zur Handbetätigung dient oder die mit einer anderen beliebigen Kraftquelle verbunden ist und über die alle Riegel gleichzeitig ausgehoben oder eingesetzt werden können. Zweckmäßigerweise ist der Augbolzen 55.1 als Gabel ausgebildet, die den Hebel 56 umfaßt. Die Einstellbarkeit des Augbolzens 55 ist durch das Einschrauben in den Hebel 54 gegeben, wobei die gewünschte Stellung durch die Kontermutter 55.2 fixiert wird. Durch diese Fixierung werden die Hebel 54 auch in der für ein Einführen richtigen Stellung gehalten.

## Patentansprüche

1. Behälter (10) für Flüssigkeiten, Schlämme und dgl. mit einer offenen, mit einem klöpperartig gewölbten Boden (20) verschließbaren Stirnseite, der an den Mantel (12) des Behälters (10) mit mindestens einem Scharnier (30) mit zur Behälter-Achse rechtwinkliger Achse schwenkbar angelenkt ist, wobei jedes der Scharniere (30) einen über Haltestützen (31.1) an dem Mantel (12) des Behälters (10) befestigten Augbolzenhalter (31) aufweist, in dem ein Augbolzen (32), dessen Schaft mit einem Gewinde versehen ist, geführt ist, der eine ersten Feststellmutter (34.1) aufweist, mit der dieser in Zugrichtung einstellbar festgelegt ist, und der weiter über einen Verbindungsbolzen (31.1) mit einem am Boden (20) befestigten und mit einem Auge versehenen Ausleger (26) zusammenwirkend verbunden ist, wobei der Behältermantel (12) mit mehreren über ihren Umfang verteilt angeordneten, mit dem Boden (20) zusammenwirkenden Verriegelungselementen (40; 50) versehen ist, **dadurch gekennzeichnet**, daß jedes der mit dem Boden (20) zusammenwirkenden, bezüglich des Haltepunktes einstellbar ausgebildeten Verriegelungselemente (50) mit einem tangential zu den Flanschringen (11; 21) bewegbarem Riegel (54) versehen ist und jeder der eingesetzten Riegel (54) mit einer Außenfläche gegen eine behälterfeste Gegenfläche abgestützt ist, während eine der Außenfläche gegenüber angeordnete Schrägfläche (54.1) mit einer ihrer Schräge entsprechenden Gegenfläche (51.1) an einer verschlußbodenfesten Riegelaufnahme (51) als Keilverschluss zusammenwirkt, und wobei jeder der Riegel (54) an seinem einen Ende einen einstellbaren Augbolzen (55) aufweist, dessen Auge (1) mit dem einen Ende eines um einen behälterfesten Bolzen (57) drehbaren Hebels (56) zusammenwirkt, und daß der Augbolzen (32) jedes der Scharniere (30) eine zweite Kontermutter (34.2) aufweist, mittels der dieser gegen die Zugrichtung einstellbar festlegbar ist.

2. Behälter nach Anspruch 1, **dadurch gekennzeichnet**, daß die behälterfeste Gegenfläche der Stirnseiten von auf dem behälterseitigen Flanschring (11) vorgesehenen Backen (52) gebildet ist, wobei die Backen (52) axial ausgerichtet sind und zur Öffnungsseite des Behälters (10) hin eine den Abstand zwischen ihnen vergrößernde Abknickung aufweisen und daß auf dem bodenseitigen Flanschring (21) eine axial ausgerichtete, zwischen die Backen (52) einführbare Riegelaufnahme (51) vorgesehen ist, wobei die Riegelaufnahme (51) eine Öffnung (53) aufweist, deren Querschnitt dem Querschnitt des einzuführenden Riegels (54) entspricht, und wobei die dem freien Ende der Riegelaufnahme (51) zugewandte Innenwand (51.1) der Öffnung (53) die mit der Schrägfläche (54.1) des Riegels (54) zusammenwirkende Schrägfläche bildet.

3. Behälter nach Anspruch 1 oder 2, **dadurch gekennzeichnet**, daß alle freien Enden der Hebel (56) aller Riegelverschlüsse (50) über eine den Behälter (10) umfassende Koppel (58) miteinander verbunden sind, wobei als Antrieb der Koppel (58) einer der Hebel (56) über das Auge (55.1) eines der Riegel (54) hinaus eine Verlängerung (56.1) aufweist.

4. Behälter (10) für Flüssigkeiten, Schlämme und dgl. mit einer offenen, mit einem klöpperartig gewölbten Boden (20) verschließbaren Stirnseite, der an den Mantel (12) des Behälters (10) mit mindestens einem Scharnier (30) mit zur Behälter-Achse rechtwinkliger Achse schwenkbar angelenkt ist, wobei jedes der Scharniere (30) einen über Haltestützen (31.1) an dem Mantel (12) des Behälters (10) befestigten Augbolzenhalter (31) aufweist, in dem ein Augbolzen (32), dessen Schaft mit einem Gewinde versehen ist, geführt ist, der eine ersten Feststellmutter (34.1) aufweist, mit der dieser in Zugrichtung einstellbar festgelegt ist, und der weiter über einen Verbindungsbolzen (31.1) mit einem am Boden (20) befestigten und mit einem Auge versehenen Ausleger (26) zusammenwirkend verbunden ist, wobei der Behältermantel (12) mit mehreren über ihren Umfang verteilt angeordneten, mit dem Boden (20) zusammenwirkenden Verriegelungselementen (40; 50) versehen ist, **dadurch gekennzeichnet**, daß jedes der mit dem Boden (20) zusammenwirkenden, bezüglich seines Haltepunktes einstellbar ausgebildeten Verriegelungselemente (40) als Über-Totpunkt-Verschluß ausgebildet ist, wobei jedes der Verriegelungselemente (40) mit einer Kralle (42) hinter eine Pratze am Verschlußboden (20) greift und jede der Krallen (42) über eine Schubstange (47) und einen Lenker (43) mit einem behälterfesten Basisteil (41) verbunden ist, wobei die Schubstange (47) zwischen Lenker (43) und Kralle (42) mindestens in ihren Endbereichen mit die Justierung der Lage der Kralle (42) ermöglichenden Gewinde versehen ist, und daß der Augbolzen (32) jedes der Scharniere (30) eine zweite Kontermutter (34.2) aufweist, mittels der dieser gegen die Zugrichtung einstellbar festlegbar ist.

5. Behälter nach Anspruch 4, **dadurch gekennzeichnet**, daß der Lenker (43) bei geschlossenem Verriegelungselement (40) auf einem im Basisteil (41) vorgesehenen, zum Einstellen des Haltepunktes verstellbaren Justierbolzen (49) aufliegt und vorzugsweise mit einem Loch (43.1) zum Öffnen vorzugsweise mittels eines Hydraulikzylinders versehen ist.

6. Behälter nach Anspruch 4 oder 5, **dadurch gekennzeichnet**, daß der Flanschring (21) am Verschlußboden nach außen überstehend angeordnet ist und die Pratze für den Angriff der Kralle (42) des Verriegelungselements (40) bildet.

7. Behälter nach einem der Ansprüche 4 bis 6, **dadurch gekennzeichnet**, daß die in den beiden Endbereichen der Schubstange (47) vorgesehenen Gewinde gegenläufig sind, wobei das lenkerseitige Aufnahmestück (45) und das krallenseitige Aufnahmestück (46) für die Schubstange (47) dazu korrespondierend ebenfalls gegenläufige Gewinde aufweist, und daß die Schubstange (47) mit einem Paßstück (48) versehen ist, das vorzugsweise etwa in ihrer Mitte angeordnet und als Sechskant ausgebildet ist.

8. Behälter nach einem der Ansprüche 1 bis 7, **dadurch gekennzeichnet**, daß Behälter (10) und Boden (20) an den einander zugewandten Stirnflächen mit je einem Flanschring (11, 21) versehen sind, deren einander zugewandten Kreisringflächen bei geschlossenem Behälter (10) einander parallel gegenüberstehen und eine der Kreisringflächen mindestens eine umlaufende Nut (13) mit einem Dichtring (14), dessen Querabmessung der mittleren Nut-Weite entspricht, aufweist, wobei die Breite der Flanschringe (11; 21) mindestens der 4-fachen Dicke der Behälterwand und die mittlere Weite der Nut (13) etwa 1/3 der Breite der Kreisringfläche betragen und daß die Nut (13) in dem einen der Flanschringe (11;21) eine Tiefe höchstens gleich der Höhe des Dichtringes (14) aufweist, und wobei die Gegenfläche von der der Kreisringfläche mit Nut (13) des einen Flanschringes (11; 21) gegenüberliegenden Kreisringfläche des anderen Flanschringes (21; 11) gebildet ist.

9. Behälter nach einem der Ansprüche 1 bis 7, **dadurch gekennzeichnet**, daß Behälter (10) und Boden (20) an den einander zugewandten Stirnflächen mit je einem Flanschring (11, 21) versehen sind, deren einander zugewandten Kreisringflächen bei geschlossenem Behälter (10) einander parallel gegenüberstehen und eine der Kreisringflächen mindestens eine umlaufende Nut (13) mit einem Dichtring (14), dessen Querabmessung der mittleren Nut-Weite entspricht, aufweist, wobei die Breite der Flanschringe (11; 21) mindestens der 4-fachen Dicke der Behälterwand und die mittlere Weite der Nut (13) etwa 1/3 der Breite der Kreisringfläche betragen und daß die Nut (13) in dem einen der Flanschringe (11;21) eine Tiefe mindestens gleich der Höhe des Dichtringes (14) aufweist, und wobei die Gegenfläche von einer mittig zur Nut (13) verlaufenden, auf der der Kreisringfläche mit Nut (13) des einen Flanschringes (11; 21) gegenüberliegenden Kreisringfläche des anderen Flanschringes (21; 11) angeordneten, erhabenen, umlaufenden Vorsprung (23) gebildet ist.

10. Behälter nach Anspruch 9, **dadurch gekennzeichnet**, daß der Querschnitt des umlaufenden Vorsprunges (23) ein rechteckiger ist, mit einer Breite höchstens gleich der engsten Weite der Nut (13).

11. Behälter nach Anspruch 9, **dadurch gekennzeichnet**, daß der Querschnitt des umlaufenden Vorsprunges (23) ein dreieckiger ist.

## Claims

1. Container (10) for liquids, slurries and the like, with an open front side which can be closed by means of a dished end (20) and is pivotably coupled to the shell (12) of the container (10) by at least one hinge (30) having its axis at right angles to the axis of the container, each of the hinges (30) having an eyebolt holder (31.1) which is secured via holding stays (31.1) on the shell (12) of the container (10) and in which is guided an eyebolt (32), the shank of which is provided with a thread, which has a first fixing nut (34.1), by means of which the said eyebolt is fixed adjustably in the direction of tension, and which is furthermore connected cooperatively, via a connecting bolt (31.1), to a bracket (26) secured on the end (20) and provided with an eye, the container shell (12) being provided with a plurality of locking elements (40; 50) arranged in a manner distributed over its circumference and cooperating with the end (20), characterised in that each of the locking elements (50) cooperating with the end (20), the said locking elements being designed to be adjustable as regards the locking point, is provided with a latch (54) movable tangentially to the flange rings (11; 21) and each of the latches (54) used is supported by an outer face against a mating surface fixed on the container, while an oblique face (54.1) arranged opposite the outer face cooperates as a wedge fastener with a mating surface (51.1) corresponding to its obliquity and present on a latch receiver (51) fixed on the closure end, and each of the latches (54) having at one end an adjustable eyebolt (55), the eye (55.1) of which cooperates with one end of a lever (56) pivotable about a pivot (57) fixed to the container, and in that the eyebolt (32) of each of the hinges (30) has a second lock nut (34.2), by means of which it can be fixed in a position adjustable counter to the direction of tension.

2. Container according to Claim 1, characterised in that the mating surface of the front ends, the said mating surface being fixed on the container, is formed by jaws (52) provided on the flange ring (11) situated on the container, the jaws (52) being oriented axially and, towards the aperture side of the container (10), having a bend which increases the distance between them, and in that an axially oriented latch receiver (51) which can be introduced between the jaws (52) is provided on the flange ring (21) situated on the end, the latch receiver (51) having an opening (53), the cross-section of which corresponds to the cross-section of the latch (54) to be introduced, and that inner wall (51.1) of the opening (53) which faces the free end of the latch receiver (51) forming the oblique face cooperating with the oblique face (54.1) of the latch (54).

3. Container according to Claim 1 or 2, characterised in that all free ends of the levers (56) of all the latch-type fasteners (50) are connected to one another via a coupler (58) encircling the container (10), one of the levers (56) having, as actuator for the coupler (58), an extension (56.1) which extends beyond the eye (55.1) of one of the latches (54).

4. Container (10) for liquids, slurries and the like, with an open front end which can be closed by means of a dished end (20) and is pivotably coupled to the shell (12) of the container (10) by at least one hinge (30) having its axis at right angles to the axis of the container, each of the hinges (30) having an eyebolt holder (31) which is secured via holding stays (31.1) on the shell (12) of the container (10) and in which is guided an eyebolt (32), the shank of which is provided with a thread, which has a first fixing nut (34.1), by means of which the said eyebolt is fixed adjustably in the direction of tension, and which is furthermore connected cooperatively, via a connecting bolt (31.1), to a bracket (26) secured on the end (20) and provided with an eye, the container shell (12) being provided with a plurality of locking elements (40; 50) arranged in a manner distributed over its circumference and cooperating with the end (20), characterised in that each of the locking elements (40) cooperating with the end (20), the said elements being designed to be adjustable as regards the locking point, is designed as an over-centre fastener, each of the locking elements (40) engaging by a claw (42) behind a lug on the closure end (20) and each of the claws (42) being connected via a connecting rod (47) and a link (43) to a base part (41) fixed on the container, the connecting rod (47) between link (43) and claw (42) being provided, at least in its end regions, with a thread which makes possible the adjustment of the position of the claw (42), and in that the eyebolt (32) of each of the hinges (30) has a second lock nut (34.2), by means of which it is fixed in a position adjustable counter to the direction of tension.

5. Container according to Claim 4, characterised in that, with the locking element (40) closed, the link (43) rests on an adjusting bolt (49), which is provided in the base part (41) and can be adjusted for the purpose of adjusting the locking point, and the link is preferably provided with a hole (43.1) for the purpose of opening, preferably by means of a hydraulic cylinder.

6. Container according to Claim 4 or 5, characterised in that the flange ring (21) on the closure end is arranged in such a way as to project outwards and forms the lug for the engagement of the claw (42) of the locking element (40).

7. Container according to one of Claims 4 to 6, characterised in that the threads provided in the two end regions of the connecting rod (47) are of opposite hand, the receiving piece (45) on the link side and the receiving piece (46) on the claw side, for the connecting rod (47), likewise having threads of opposite hand in corresponding fashion, and in that the connecting rod (47) is provided with an adaptor (48), which is preferably arranged approximately in its centre and is designed as a hexagon.

8. Container according to one of Claims 1 to 7, characterised in that, on the mutually facing front faces, container (10) and end (20) are each provided with a flange ring (11, 21), the mutually facing annular faces of which lie opposite and parallel to one another when the container (10) is closed, and one of the annular faces has at least one encircling groove (13) with a sealing ring (14), the cross-sectional dimension of which corresponds to the mean groove width, the width of the flange rings (11; 21) being at least 4 times the thickness of the container wall and the mean width of the groove (13) being about 1/3 of the width of the annular face, and in that the groove (13) in one of the flange rings (11; 21) has a depth at most equal to the height of the sealing ring (14), and the mating surface is formed by the annular face of the other flange ring (21; 11), which lies opposite the annular face with groove (13) of the first flange ring (11; 21).

9. Container according to one of Claims 1 to 7, characterised in that, on the mutually facing front faces, container (10) and end (20) are each provided with a flange ring (11, 21), the mutually facing annular faces of which lie opposite and parallel to one another when the container (10) is closed, and one of the annular faces has at least one encircling groove (13) with a sealing ring (14), the cross-sectional dimension of which corresponds to the mean groove width, the width of the flange rings (11; 21) being at least 4 times the thickness of the container wall and the mean width of the groove (13) being about 1/3 of the width of the annular face, and in that the groove (13) in one of the flange rings (11; 21) has a depth at least equal to the height of the sealing ring (14), and the mating surface being formed by a raised, encircling projection (23) which extends centrally in relation to the groove (13) and is arranged on the annular face of the other flange ring (21; 11), which lies opposite the annular face with groove (13) of the first flange ring (11; 21).

10. Container according to Claim 9, characterised in that the cross-section of the encircling projection (23) is rectangular, with a width at most equal to the narrowest width of the groove (13).

11. Container according to Claim 9, characterised in that the cross-section of the encircling projection (23) is triangular.

**Revendications**

1. Récipient (10) pour liquides, boues et matériaux analogues comportant un côté frontal ouvert obturable ou verrouillable avec un fond convexe de type torosphérique (20) qui est articulé sur l'enveloppe (12) du récipient (10) avec au moins une charnière pivotante comportant un axe à angle droit par rapport à l'axe du récipient, chacune des charnières (30) présentant un support de boulon à oeillet (31) fixé par des supports de retenue (31.1) sur l'enveloppe (12) du récipient (10), dans lequel est guidé un boulon à oeillet (32) dont la tige est munie d'un filetage et qui présente un premier écrou de blocage (34.1) avec lequel celui-ci peut être fixé de façon réglable dans la direction de la traction et qui de plus est relié de façon coopérante à un bras (26) muni d'un oeillet fixé sur le fond (20), l'enveloppe (12) du récipient étant munie de plusieurs éléments de verrouillage (40 ; 50), agencés de façon répartie sur sa périphérie, coopérant avec le fond (20), caractérisé en ce que chacun des éléments de verrouillage (50) conçus de facon réglable par rapport au point de fixation, coopérant avec le fond (20) est muni d'un verrou mobile (54), tangentiel aux colliers de bride (11 ; 21) et chacun des verrous (54) mis en oeuvre vient en appui avec sa face extérieure sur une contre-surface solidaire du récipient, tandis qu'une surface oblique (54.1) agencée en opposition à la surface extérieure coopère avec une contre-surface (51.1) correspondant à son oblique sur un logement de verrou (51) solidaire du fond du système d'obturation en tant que fermeture à coin, et chacun des verrous (54) présentant un boulon à oeillet (55) réglable sur une de ses extrémités, dont l'oeillet (1) coopère avec une des extrémités du levier rotatif (56) autour d'un axe ou boulon (57) solidaire du récipient, et en ce que le boulon à oeillet (32) de chaque charnière (30) présente un deuxième contre-écrou (34.2) au moyen duquel celui-ci peut être fixé de façon réglable en opposition à la direction de traction.

2. Récipient selon la revendication 1, caractérisé en ce que le contre-surface solidaire du récipient, des côtés frontaux est constituée par les mâchoires (52) prévues sur le collier de bride (11) sur le côté du récipient, les mâchoires (52) étant dirigées axialement et en direction du côté d'ouverture du récipient (10) présentent un espacement entre leurs pliures croissantes et en ce que sur le collier de bride sur le côté du fond (21) est prévu un logement de verrou dirigé axialement entre les mâchoires (52), le logement de verrou (51) présentant une ouverture dont la section transversale correspond à la section transversale du verrou à introduire (54), et la paroi intérieure (51.1) dirigée vers l'extrémité libre du logement de verrou (51), de l'ouverture (53) formant la surface oblique coopérant avec la surface oblique (54.1) du verrou (54).

3. Récipient selon la revendication 1 ou la revendication 2, caractérisé en ce que toutes les extrémités libres du levier (56) de toutes les fermetures à verrou (50) sont reliées entre elles par une bielle (58) entourant le récipient (10), en tant qu'élément d'entraînement de la bielle (58) un des leviers (56) présentant une prolongation (56.1) par l'oeillet (51.1) d'un des verrous (54).

4. Récipient (10) pour liquides, boues et matériaux analogues comportent un côté frontal ouvert obturable ou verrouillable avec un fond convexe de type torosphérique (20) qui est articulé sur l'enveloppe (12) du récipient (10) avec au moins une charnière pivotante comportant un axe à angle droit par rapport à l'axe du récipient, chacune des charnières (30) présentant un support de boulon à oeillet (31) fixé par des supports de retenue (31.1) sur l'enveloppe (12) du récipient (10), dans lequel est guidé un boulon à oeillet (32) dont la tige est munie d'un filetage et qui présente un premier écrou de blocage (34.1) avec lequel celui-ci peut être fixé de façon réglable dans la direction de la traction et qui de plus, est relié de façon coopérante à un bras (26) muni d'un oeillet fixé sur le fond (20), l'enveloppe (12) du récipient étant munie de plusieurs éléments de verrouillage (40 ; 50), agencés de façon répartie sur sa périphérie, coopérant avec le fond (20), caractérisé en ce que chacun des éléments de verrouillage (40) coopérant avec le fond (20) conçu de façon ajustable par rapport à son point de fixation est réalisé sous forme de fermeture de dépassement de point mort, chacun des éléments de verrouillage (40) s'engageant avec un crampon (42) derrière une griffe sur le fond de fermeture (20) et chacun des crampons (42) étant relié par une tige de poussée (47) et une articulation (43) avec une partie de base (41) solidaire du récipient, la tige de poussée (47) entre l'articulation (43) et le crampon (42) étant munie au moins dans ses zones d'extrémité d'un filetage permettant l'ajustage de la position du crampon (42), et en ce que le boulon à oeillet (32) de chacune des charnières (30) présente un deuxième contre-écrou (34.2) au moyen duquel celui-ci peut être fixé de façon ajustable en opposition à la direction de traction.

5. Récipient selon la revendication 4, caractérisé en ce que l'articulation (43) avec l'élément de verrouillage (40) fermé repose sur un boulon ou axe de réglage (49) prévu sur la partie de base (41) pour le réglage du point de fixation et il est de préférence muni d'un trou (43.1) pour l'ouverture de préférence au moyen d'un vérin hydraulique.

6. Récipient selon la revendication 4 ou 5, caractérisé en ce que le collier de bride (21) est agencé sur le fond de fermeture de façon à former saillie vers l'extérieur et forme la griffe pour l'engagement du crampon (42) de l'élément de verrouillage (40).

7. Récipient selon l'une des revendications 4 à 6, caractérisé en ce que les filetages prévus dans les deux zones d'extrémité de la tige de poussée (47) sont en sens contraire, l'élément de logement (45) sur le côté articulation et l'élément de logement (46) sur le côté crampon pour la tige de poussée (47) présentant également des filetages contraires de façon correspondante et en ce que le tige de poussée (47) est munie d'un élément d'adaptation (48) qui de préférence, est agencé sensiblement dans sa partie médiane et forme un hexagone.

8. Récipient selon l'une des revendications 1 à 7, caractérisé en ce que le récipient (10) et le fond (20) sont respectivement munis sur les faces frontales opposées entre elles d'un collier de bride (11, 21), dont les faces de couronne opposées entre elles avec le récipient fermé (10) se font face parralèllement entre elles et l'une des faces de couronne présente au moins une gorge circulaire (13) avec un joint d'étanchéité (14) dont la dimension de section correspond à la largeur de la gorge médiane, la largeur des colliers de bride (11 ; 21) étant au moins égale à quatre fois l'épaisseur de la paroi du récipient et la largeur médiane de la gorge (13) étant égale sensiblement au tiers de la largeur de la face de couronne et en ce que la gorge (13) présente dans l'un des colliers de bride (11 ; 21) une profondeur au maximum égale à la hauteur du joint d'étanchéité (14), et la contre-surface étant formée par la face de couronne opposée à la face de couronne avec une gorge (13) du collier de bride (11 ; 21) de l'autre collier de bride (21 ; 11).

9. Récipient selon l'une des revendications 1 à 7, caractérisé en ce que le récipient (10) et le fond (20) sont munis sur les faces frontales opposées entre elles de respectivement un collier de bride (11, 21) dont les faces de couronne opposées entre elles avec le récipient fermé (10) se font face parallèlement et l'une des faces de couronne présentant au moins une gorge circulaire (13) avec un anneau d'étanchéité (14) dont la dimension de section correspond à la largeur de gorge médiane, la largeur des colliers de bride (11 ; 21) étant au moins égale à quatre fois l'épaisseur de la paroi du récipient et la largeur médiane de la gorge (13) étant égale à sensiblement un tiers de la largeur de la face de couronne et en ce que la gorge (13) présente dans l'un des colliers de bride (11 ; 21) une profondeur au moins égale à la hauteur du joint d'étanchéité (14), et la contre-surface étant formée par une saillie circulaire (23), surélevée, agencée dans la partie médiane par rapport à la gorge (13) sur la face de couronne opposée munie d'une gorge (13) d'un collier de bride (11 ; 21), de l'autre collier de bride (21 ; 11).

10. Récipient selon la revendication 9, caractérisé en ce que la section de la saillie circulaire (23) est rectangulaire avec une largeur au maximum égale à la largeur la plus étroite de la gorge (13).

11. Récipient selon la revendication 9, caractérisé en ce que le section de la saillie circulaire (23) est triangulaire.

Fig.1

Fig.2

Fig.3

Fig.4

13

Fig.5

Fig.6

Fig.7

Fig.8